# EUROPÄISCHE PATENTSCHRIFT

(11) **EP 1 658 952 B1**
(45) Veröffentlichungstag und Bekanntmachung des Hinweises auf die Patenterteilung: **25.04.2007**
(21) Anmeldenummer: 05023839.3
(22) Anmeldetag: 02.11.2005
(51) Int. Cl.: B29C 65/00, B29D 30/42, B29C 65/78

(54) **Spleissvorrichtung zum stumpfen Verspleissen zweier Bandabschnitte**
Splicing device for butt-joining of two band portions
Appareil d'épissage pour raccorder bout à bout des bandes

(30) Priorität: 17.11.2004 DE 102004055528
(43) Veröffentlichungstag der Anmeldung: 24.05.2006
(73) Patentinhaber: Karl Eugen Fischer GmbH Maschinenfabrik, D-96224 Burgkunstadt (DE)
(72) Erfinder: Hoffmann, Bernd, 96224 Burgkunstadt (DE); Lauer, Stefan, 96247 Michelau-Schwürbitz (DE)
(74) Vertreter: Blaumeier, Jörg

(56) Entgegenhaltungen:
- DE-A1- 2 431 583
- DE-A1- 10 219 928
- DE-B- 1 404 519
- GB-A- 1 376 400

## Beschreibung

Die Erfindung bezieht sich auf eine Spleißvorrichtung zum stumpfen Verspleißen zweier Bandabschnitte, insbesondere un- oder vorvulkanisierter Cordbandabschnitte zur Reifenherstellung, mit zwei gegeneinander verschiebbaren Spleißleistenpaaren, deren übereinander liegende Einzelspleißleisten zwischen einer oberen Freigabestellung und einer unteren Einklemmstellung für die Ränder der Bandabschnitte verfahrbar sind, wobei die Spleißleisten Zahnleisten sind und sowohl die Zähne der beiden oberen als auch die der beiden unteren Zahnleisten gegeneinander gestellt und auf Lücke versetzt angeordnet sind und wobei die Zähne der übereinander liegenden Zahnleisten auf Lücke versetzt angeordnet sind.

Eine derartige, aus der DE 102 19 928 B4 bekannt gewordene Spleißvorrichtung hat gegenüber den früher verwendeten Spleißvorrichtungen, bei denen die Zähne übereinander liegender Zahnstangen deckungsgleich übereinander lagen, den Vorteil, dass sich eine optimale Abschirmung dergestalt ergibt, dass sich beim Zusammenschieben ergebende Wülste nicht zu einem Austreten des Materials nach oben oder unten führen können.

Obgleich diese eingangs angesprochene Spleißvorrichtung zu einer erheblichen Verbesserung beim Stumpfschweißen speziell von un- oder vorvulkanisierten Cordbandabschnitten zur Reifenherstellung führt, ergeben sich speziell bei Textilcordbändern manchmal Schwierigkeiten, wenn - wie dies bisher meist der Fall war - handelsübliche Zahnstangen verwendet werden.

Aus DE 1 404 519 B ist eine Spleißvorrichtung bekannt, umfassend übereinander liegende Spleißleisten, wobei die Zähne zweier horizontal benachbarter, ineinander zu verfahrender Spleißleisten auf Lücke zueinander stehen, die Zähne der übereinander angeordneten Spleißleisten jedoch einander überdecken. An den Enden der Zahnleisten sind Klemmrippen vorgesehen. Weiterhin sind schwenkbare Anschlagleisten vorgesehen, die zum Ausrichten der zu verspleißenden Bandkante aus einer horizontalen in eine vertikale Stellung geschwenkt werden können, in welcher die zahnartigen Anschlagglieder der Anschlagleisten zwischen die Zähne der Klemmleisten greifen und die Bandkante ausrichten.

Ferner ist aus DE 24 31 583 A1 eine Spleißvorrichtung bekannt, die einander gegenüberliegende Zahnleistenpaare aufweisen, deren Zähne ineinander gefahren werden können, An den Zahnleisten sind rippenförmig profilierte Klemmrippen vorgesehen.

Der Erfindung liegt ja die Aufgabe zugrunde, eine Spleißvorrichtung der eingangs genannten Art so auszugestalten, dass die Verdichtung beim Zusammenfahren der Zahnleisten zu einem über den gesamten Spleißbereich gleichbleibend dicken Bandabschnitt führt.

Zur Lösung dieser Aufgabe ist erfindungsgemäß vorgesehen, dass die Zahnleisten mit jeweils auf der Klemmseite hinter den Zähnen angeordneten erhöhten Klemmrippen versehen sind, wobei die Zähne vollständig ineinander fahrbar sind, so dass sich geschlossene Flächen, gebildet durch die zum Bandabschnitt weisenden Zahnflächen, ergeben. Der Überstand der Klemmrippen über die entsprechende Ebene der Zahnflanken liegt abhängig von der Dicke der Bandabschnitte zwischen ca. 0,1 und 1 mm.

Durch die erfindungsgemäßen Klemmrippen ergeben sich zwischen der Oberkante des zu verspleißenden Bandabschnitts und der darüber liegenden Ebene der Zahnflanken ein dem Überstand der Klemmrippen entsprechender Freiraum, in den sich das noch nicht ausvulkanisierte Material der Cordbandabschnitte beim Zusammenfahren der Zahnleisten ausgleichend hineinverschieben kann, so dass nicht das gesamte Material beim Zusammenfahren durch entsprechende Verdichtung des Materials im Ursprungsvolumen aufgenommen werden muss, was - wie es sich in der Praxis gezeigt hat - in den meisten Fällen nicht möglich ist.

Durch die erfindungsgemäße Ausbildung der Klemmrippen ergibt sich in Ausgestaltung der Erfindung die Möglichkeit, die Zahnleisten mit konisch zulaufenden Zähnen vollständig ineinander zu verfahren, so dass sich letztendlich eine völlig glatte Oberfläche der Spleißzone der am Stumpf aneinander gespleißten Bandabschnitte ergibt.

Mit Vorteil können die Zähne komplementär zu den Lücken trapezförmig ausgebildet sein, wobei gemäß einem weiteren Merkmal der vorliegenden Erfindung die Länge der Zähne erheblich größer ist als ihr Abstand. Während bei herkömmlichen Normzahnleisten die Länge der Zähne beispielsweise 5 mm bei einem Abstand von 7 mm betrug, soll die Länge der Zähne erfindungsgemäß 10 bis 40 mm, vorzugsweise ca. 30 mm und ihr Abstand 5 bis 20 mm, vorzugsweise ca. 14 mm betragen. Durch diese längere Ausbildung der Zähne und dem demzufolge auch größeren Hub beim Zusammenfahren der Zahnleisten ergibt sich in Verbindung mit dem angesprochenen Freiraum, der sich durch die Klemmrippen ergibt, eine sehr viel bessere und wirkungsvollere Verdichtung des Bandmaterials im Spleißbereich.

Schließlich liegt es auch noch im Rahmen der Erfindung, dass die Zähne der Zahnleisten in der Ausgangsklemmstellung, also vor dem Verdichten und Zusammenfahren der Zahnleisten ineinander, bereits mehrere Millimeter ineinander greifen, wobei bevorzugt die Stoßkante der aneinander liegenden Bandabschnitte etwa in der Mitte des Überlappungsbereichs der Zähne in der Ausgangsstellung angeordnet ist.

Eine zweckmäßige Weiterbildung der Erfindung sieht vor, die Oberfläche einer Klemmrippe unter Ausbildung von am Bandabschnitt angreifenden Erhebungen derart zu strukturieren, dass ein solcher Eingriff einer oder mehrerer Erhebungen zwischen zwei zueinander beabstandet parallel und senkrecht zur Bandlängsrichtung verlaufende Bandfäden, der beim Klemmen und/oder beim Verschiebevorgang zu einer Auseinanderbewegung beider Bandfäden führt, ausgeschlossen ist. Der Erfindungsausgestaltung liegt zum einen das Ziel zugrunde, durch eine gezielte Strukturierung der Klemmrippenoberfläche die Haftung oder den Grip zwischen Rippenoberfläche und dem Band zu verbessern. Hierzu werden oberflächlich entsprechende Erhebungen vorgesehen bzw. durch Einbringen von Vertiefungen durch Einfräsen etc. ausgebildet. Es hat sich jedoch als problematisch erwiesen, wenn diese Erhebungen so verlaufen, dass sie beim Verklemmen zwischen zwei senkrecht zur Bandlängsachse verlaufende Stahl- oder Textilfäden eingreifen können. Denn ein solcher Eingriff führt beim Verklemmen oder beim Verschieben dazu, dass die beiden Fäden, die in der nicht vollständig vulkanisierten, elastischen Bandmaterialmatrix gehalten sind, durch das Eindrücken einer Erhebung zwischen sie auseinander geschoben werden, mithin also der Fadenverlauf geändert und damit nachteilig beeinflusst wird. Dies wäre beispielsweise der Fall, wenn die Oberfläche derart strukturiert wird, dass geradlinige, längs der Klemmrippe und damit quer zur Bandlängsrichtung (gleichbedeutend mit einer Parallelausrichtung zu den Bandfäden) laufende Erhebungen vorliegen, die relativ schmal sind, mithin also zwischen zwei beabstandete Bandfäden, die beispielsweise ca. 1,5 - 2 mm beabstandet sind, eingeführt werden können. Denn bei einer solchen Ausgestaltung kommt es zwangsläufig vor, dass die Erhebungen beim Verklemmen zwischen die Bandfäden gedrückt werden, was zu einer ungewollten Bandverformung im Klemmbereich führt.

Dem wird erfindungsgemäß durch eine solche Strukturierung begegnet, die einen solchen Eingriff gerade ausschließt, mithin also die Erhebungen, die durch die Strukturierung herausgearbeitet werden, so ausgeführt sind, dass ein solcher Eingriff gerade nicht möglich ist.

Hierzu sind beliebige Strukturierungsmuster denkbar. Eine erste Erfindungsalternative sieht vor, die Oberseite einer Klemmrippe mittels Vertiefungen, die zumindest abschnittsweise unter einem Winkel ≠ 90° zur Bandlängsrichtung verlaufen, zu strukturieren. Durch diese Vertiefungen, die beispielsweise eingefräst werden können, und die daraus resultierenden Erhebungen, die zwangsläufig ebenfalls unter einem Winkel ≠ 90° zur Bandlängsrichtung verlaufen, wird in jedem Fall ausgeschlossen, dass - gesehen auf die gesamte Klemmlänge - die Erhebungen genau zwischen zwei Bandfäden eingeführt werden können, nachdem aufgrund einer solchen Erhebungsform bzw. -führung gewährleistet ist, dass eine Erhebung stets mehrere parallele Bandfäden übergreift, mithin also nicht so schmal ist und parallel zu den Fäden verläuft, dass sie zwischen zwei Fäden gedrückt werden kann. Die Vertiefungen können beliebig geformt sein, beispielsweise wellen- oder bogenförmig, geradlinig, jedoch gewinkelt zur Bandlängsrichtung bzw. zur Rippenlängsrichtung, gezackt, rändelförmig oder oval- oder kreisförmig. Die jeweilige Vertiefungsform ist dabei stets so zu wählen, dass eben die resultierenden Erhebungen so verlaufen bzw. so breit sind, dass zwingend stets mehrere Fäden beim Klemmen übergriffen werden.

Zweckmäßig ist es zur Verbesserung des Grips, wenn die über die Vertiefungen definierten Erhebungen - querschnittlich gesehen - zahnförmig ausgebildet sind, wobei die freien Enden der Erhebungen spitz, flach oder gerundet auslaufen. Es wird also ein Zahnrelief oder eine Zahnstruktur ausgebildet, wobei die zahnförmigen Erhebungen beliebig, jedoch in keinem Fall parallel längs der Klemmrippe und damit in Fadenrichtung verlaufend, ausgestaltet sind. Neben einer Zahnform ist es auch denkbar, die über die Vertiefungen definierten Erhebungen - querschnittlich gesehen - auch wellenförmig auszuführen. Es würde hier also kein scharfkantiges Zahnprofil entstehen, sondern ein Wellenprofil das gleichermaßen griperhöhend ist, wie durch die Führung der Vertiefungen bzw. Erhöhungen gleichermaßen der nachteilige Eingriff zwischen zwei parallele Bandfäden vermieden ist.

Bei der beschriebenen Ausgestaltung der Erhebungen verlaufen diese wie ausgeführt so, dass sie letztlich keine durchgehenden, sich also über die Rippenlänge erstreckenden Erhebungen, die in ihrer Breite so sind, dass sie zwischen zwei Bandfäden eingeführt werden können, darstellen. Vielmehr verlaufen die Erhebungen stets beliebig regelmäßig oder unregelmäßig, jedoch so, dass sie in jedem Fall mehrere parallele Bandfäden übergreifen.

Denkbar ist aber auch, die Erhebungen längs der Klemmrippe, also unter einem Winkel von 90° zur Bandlängsrichtung und mithin parallel zu den Bandfäden verlaufen zu lassen, jedoch ist bei dieser Strukturierung dann zwangsläufig die Breite der verbleibenden Erhebungen derart bemessen, dass sie in der Klemmstellung wenigstens zwei zueinander beabstandet, parallel und senkrecht zur Bandlängsrichtung verlaufende Bandfäden übergreifen. In diesem Fall sind also die Klemmflächen der Erhebungen so breit, dass sie nicht zwischen zwei parallele Bandfäden eingeführt werden können, vielmehr übergreifen sie stets wenigstens zwei, bevorzugt auch drei Bandfäden. Sind die Bandfäden ca. 1,5 - 2 mm voneinander beabstandet, so sollte die Erhebung im Bereich ihrer Klemmfläche beispielsweise ca. 3 mm breit sein, gegebenenfalls auch etwas breiter. Auch hier ist zwangsläufig ausgeschlossen, dass sie beim Klemmen zwischen zwei Fäden, diese auseinander drängend, eingeführt werden.

Zweckmäßigerweise sind die Oberseiten beider einander gegenüberliegender, zum Klemmen zusammenzufahrender Klemmrippen strukturiert. Die Strukturierung kann dabei identisch sein, es können sich aber Klemmrippen mit zueinander unterschiedlichen Profilierungen gegenüberliegen. Auch ist ein Versatz der Profilierungen, sofern diese beispielsweise deckungsgleich sind, in Bandlängs- oder Bandquerrichtung denkbar.

Im Übrigen ist es besonders zweckmäßig, wenn die Ebenen oder Flächen der einander zugewandten Zahnseiten der oberen und unteren Zahnleisten parallel zueinander liegen. Diese Ebenen liegen damit auch parallel zu den an dem Bandabschnitt angreifenden Klemmflächen. Dies führt insbesondere in Verbindung mit der geringen Höhe der Klemmrippen bezogen auf die Zahnebene von <1 mm mit besonderem Vorteil dazu, dass beim Verspleißen das sich in dem von den Zahnebenen umschlossenen Raum ansammelnde Material an die Zahnflächen anlegt, hierdurch also geführt wird. Hierüber wird mit besonderem Vorteil ein Herausquetschen des Bandmaterials aus dem von den Zähnen umschlossenen Bereich verhindert, das Material wird beim Spleißen an der Ober- und der Unterseite geführt. Das Material verdickt sich im Spleißbereich minimal, je nachdem, wie hoch die Klemmrippen bezogen auf die Zahnebenen sind. Überraschenderweise kommt es jedoch trotz Anliegens des Materials beim Verspleißen an den Zahnflächen nicht zu einer Beschädigung der Bandabschnitte, das heißt, die Fäden werden nicht freigelegt bzw. der Gummi wird von diesen nicht gelöst. Vielmehr ergibt sich eine definierte, minimale Verdickung, was für eine hohe Spleißfestigkeit von besonderem Vorteil ist, wobei diese Verdickung im Hinblick auf die sehr geringe Klemmrippenhöhe bezogen auf die Bandabschnittsdicke minimal ist. Nachdem die Zähne in der zusammengefahrenen Stellung vollständig und aneinander anliegend ineinander greifen, bildet sich ober- und unterseitig jeweils eine geschlossene Zahnebene aus, die eine sichere Führung unter Verhinderung einer Banddeformation durch herausgequetschtes Bandmaterial bietet.

Alternativ zu parallel verlaufenden Zahnflächen oder -ebenen ist es auch möglich, die dem Bandabschnitt zugewandten Zahnflächen leicht geneigt oder leicht gekrümmt zu formen, so dass die einander gegenüberliegenden Zahnflächen der beiden einander gegenüberliegenden Zahnleisten zu ihrem freien Ende hin auseinanderlaufen. Bei in der Klemmposition befindlichen und vollständig zusammengefahrenen Zahnleisten ergeben sich bei dieser Ausgestaltung dann - bezogen auf zwei nebeneinander liegende, ineinander greifende Zahnleisten - gewinkelte oder bogenförmig gekrümmte Ebenen oder Flächen, die gleichwohl geschlossen sind, so dass kein Bandmaterial zwischen den Zähnen herausgequetscht werden kann. Der sich ergebende Raum, der von den Zahnleisten eingeschlossen ist, wäre dann ober- und unterseitig über leicht gewinkelte oder bogenförmig gekrümmte Ebenen oder Flächen begrenzt, wobei die konkrete Form vom Flächenwinkel bzw. dem Krümmungsradius ist. Die Ausgestaltung sollte jedoch so sein, dass sich ein der Rechteckform genäherter Freiraum ergibt. Auch hier ergibt sich beim Spleißen eine sichere Führung der Bandabschnitte infolge der Anlage der Bandabschnitte an den Zahnflächen. Der Winkel, um den die Flächen angestellt sein können, sollte möglichst klein sein, vorzugsweise ≤ 2°, insbesondere ≤1,5°. Der Krümmungsradius sollte möglichst groß sein, so dass sich nahezu eine ebene Fläche mit minimaler Kurvung ergibt.

Weitere Vorteile, Merkmale und Einzelheiten der Erfindung ergeben sich aus der nachfolgenden Beschreibung eines Ausführungsbeispiels sowie anhand der Zeichnung. Dabei zeigen:
- Fig. 1: ein Schnitt durch eine erfindungsgemäße Spleißvorrichtung nächst der Linie I - I in Fig. 2,
- Fig. 2: eine Aufsicht auf die Spleißvorrichtung nach Fig. 1 in der Ausgangsstellung mit aneinander stoßenden zwischen den übereinander liegenden Zahnleistenpaaren verklemmten Bandabschnitten, bei abgenommenen oberen Zahnleisten,

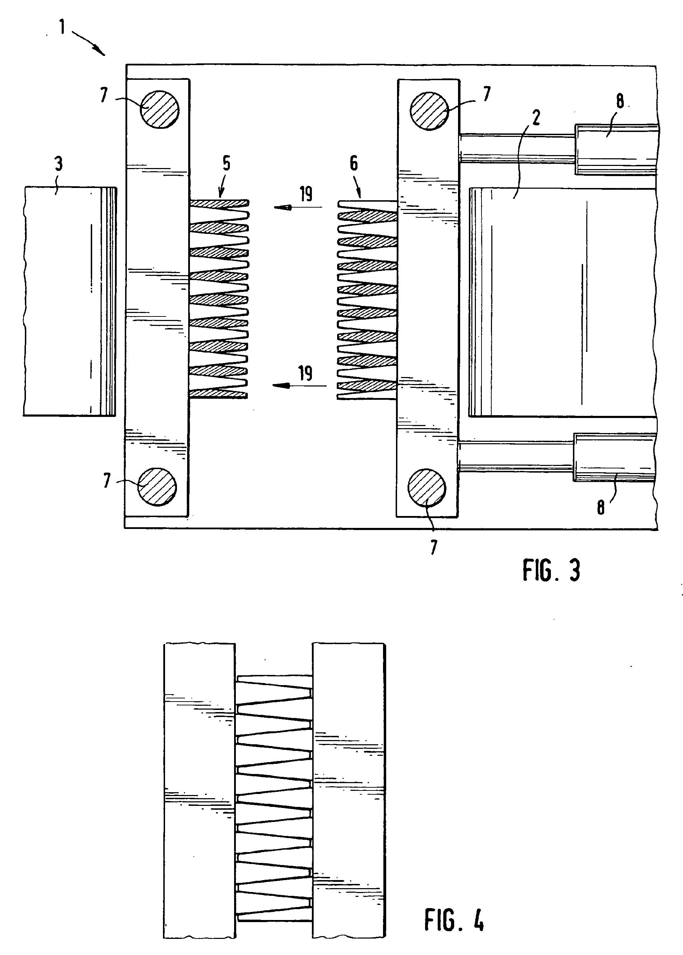

- Fig. 3: eine Aufsicht auf die Spleißvorrichtung entsprechend der Linie III - III in Fig. 1 in dem vollständig geöffneten Zustand der Zahnleisten, wobei neben den oberen Zahnleisten auch die unteren Zahnleisten hier mit eingezeichnet sind,
- Fig. 4: eine aus der Fig. 2 entsprechende Aufsicht im vollständig zusammengefahrenen Zustand der Zahnleisten,
- Fig. 5 - 11: verschiedene Ausführungsformen von zahnförmigen Oberflächenstrukturierungen,
- Fig. 13 - 19: verschiedene Aufsichten auf die Klemmrippen unter Darstellung unterschiedlicher Verläufe von der Oberflächenstrukturierung dienenden Vertiefungen bzw. Erhebungen, und
- Fig. 20 - 22: drei verschieden Ausführungen von Zahnleisten mit unterschiedlich geformten, dem Bandmaterial zugewandten Zahnflächen.

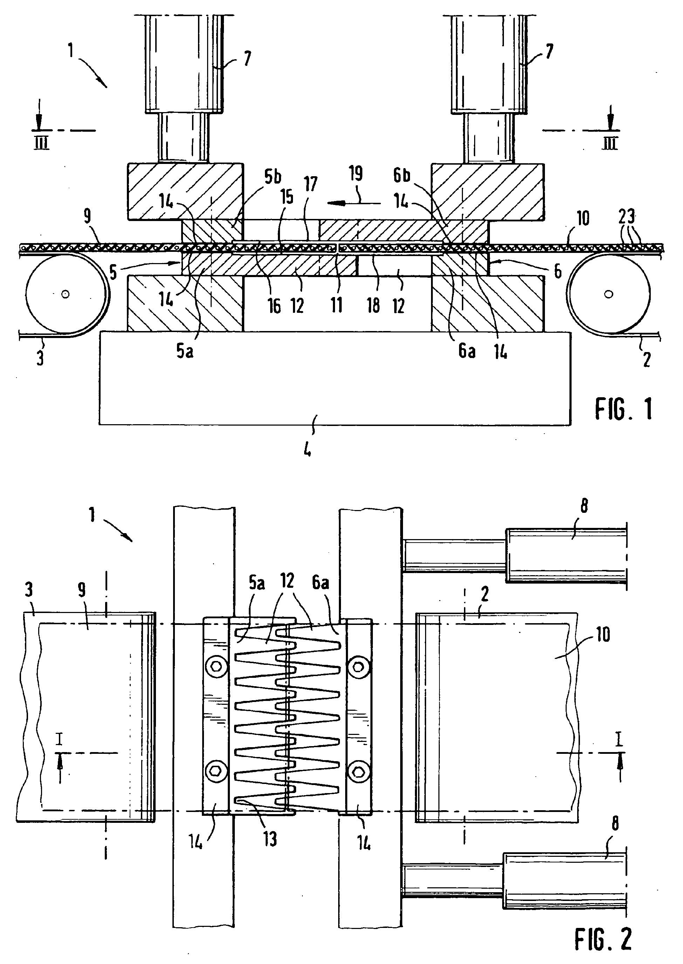

Die gezeigte Spleißvorrichtung 1, die zwischen einem Materialzuführungsband 2 und einem Materialabtransportband 3 angeordnet ist, besteht aus einem Arbeitstisch 4 und zwei Zahnleistenpaaren 5 und 6. Jedes Zahnleistenpaar 5 und 6 besteht aus unteren Zahnleisten 5a, 6a und oberen Zahnleisten 5b, 6b. Die Zahnleisten 5a und 6a sind jeweils auf Lücke versetzt angeordnet und dies gilt auch für die Zahnleisten 5b und 6b, wobei zusätzlich die oberen Zahnleisten 5b, 6b auf Lücke gegenüber den unteren Zahnleisten 5a, 6a versetzt sind. Insoweit entspricht die Anordnung der wie sie in dem bereits angesprochenen älteren Patent DE 102 19 928 B4 beschrieben ist. Die oberen Zahnleisten 5b und 6b sind mithilfe von nur schematisch als Hydraulikzylinder 7 angedeuteten Klemmvorrichtungen nach unten gegen die unteren Zahnleisten verklemmbar und gleichzeitig können die beiden rechts gezeigten in nicht gezeigter Weise am Arbeitstisch 4 geführten Zahnleisten 6a und 6b gemeinsam über eine ebenfalls als Hydraulikzylinder 8 angedeutete Vorschubeinrichtung in Richtung des Pfeils 19 in Fig. 1 gegen die beiden anderen Zahnleisten 5a und 5b verschoben werden.

Zum Verspleißen der beiden Bandabschnitte 9 und 10, die im teilweise zusammengefahrenen Zustand gemäß Fig. 2 aneinander stoßend auf den unteren Zahnleisten 5a und 6a aufliegen, werden anschließend die oberen Zahnleisten 5b und 6b heruntergefahren, um die Bandabschnitte 9 und 10 zu verklemmen. Die Stoßkante 11 der lose aneinander stoßenden Bandabschnitte 9 und 10 in der Ausgangsstellung nach Figuren 1 und 2 liegt etwa mittig im wenige Millimeter großen Überlappungsbereich der Zähne 12 der Zahnleisten.

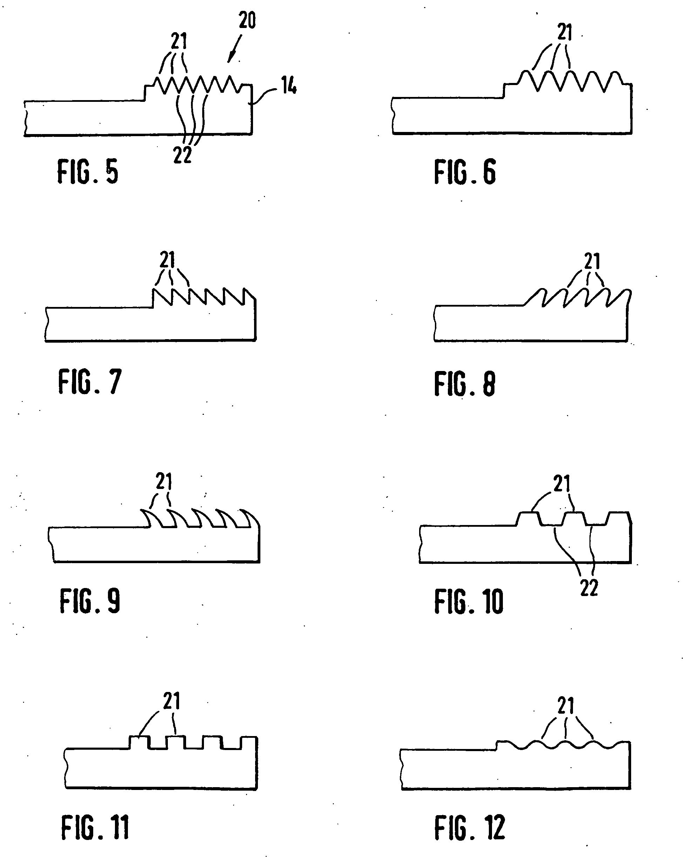

Eine wesentliche Besonderheit der vorliegenden Erfindung besteht darin, dass im Anschluss an die Zähne, also unmittelbar hinter dem Grund 13 der Zahnlücken, wenige Zehntel Millimeter hohe Klemmrippen 14 vorgesehen sind, die dazu führen, dass beim Verklemmen der Bänder 9 und 10 oberhalb und unterhalb der Ebenen 15 und 16 der Zähne 12 Freiräume 17, 18 entsprechend dem Überstand der Klemmrippen entstehen. Diese ermöglichen eine Verformung des Bandmaterials in diesen Freiraum beim Zusammenfahren der linken und rechten Zahnleistenpaare in Richtung des Pfeils 19 ineinander, wobei die Freiräume in den Figuren übertrieben dargestellt sind. Der Überstand der Klemmrippen beträgt nur 0,1 oder gar weniger als 0,1 mm bis etwa 1 mm, abhängig von der Dicke der zu verspleißenden Bänder. Bei zu verspleißenden Bändern mit einer Dicke von etwa 2 bis 3 mm beträgt der Überstand der Klemmrippen lediglich 0,2 mm. Die Zahnlänge beträgt im dargestellten Ausführungsbeispiel ca. 30 mm bei einem Zahnabstand von 14 mm und einer Breite an der Spitze der Zähne und am Grund der Zahnlücken von ca. 2 mm. Wie man insbesondere aus Fig. 4 erkennen kann, fahren die Zahnleisten beim Verspleißen praktisch vollständig ineinander, was zur Folge hat, dass keine Freiräume vorhanden sind, in die Bandmaterial nach oben oder unten ausweichen könnte.

Die Erfindung ist nicht auf das dargestellte Ausführungsbeispiel beschränkt. So ist es nicht erforderlich, dass sich die Klemmrippen 14 rechtwinklig über der Ebene 15, 16 der Zähne erheben, sondern diese Klemmrippen könnten auch bogenförmig od. dgl. in diese Ebenen 15 und 16 übergehen, die ihrerseits auch nicht unbedingt wirkliche Ebenen sein müssen, sondern die insgesamt von den Klemmrippen ausgehende flach gewölbte Flächen sein könnten. Darüber hinaus müssen die Klemmrippen 14 auch nicht über die gesamte Länge der Zahnleisten durchgehen, sondern sie könnten aus einzelnen beabstandeten Abschnitten bestehen. Die Wirkungsweise im Sinne der vorliegenden Erfindung bliebe dabei nach wie vor erhalten.

Wie in Fig. 1 ersichtlich, liegen die Zahnebenen 15 und 16 der jeweils einander gegenüberliegenden Zahnleisten parallel zueinander, sie verlaufen parallel zu den jeweiligen Klemmflächen der Klemmrippen. Nachdem die Zähne im gezeigten Ausführungsbeispiel rechtwinklig von den Klemmrippen abgehen, bildet sich letztlich ein querschnittlich gesehen rechteckiger Freiraum, in dem das Bandmaterial nach oben und unten ausweichen kann, während es verspleißt wird. Während dieses Verspleißvorgangs legt sich das Bandmaterial mit geringem Druck an die Zahnflächen der Ebenen 15, 16 an, wird also über diese geführt, ohne dass in irgendeiner Form eine Bandbeschädigung eintritt, das heißt, das Bandmaterial wird von den Bandfäden 23 in Fig. 1 nicht abgeschabt oder sonst wie freigelegt. Nachdem die Zähne auch in direktem Kontakt miteinander zusammenfahren, ergeben sich jeweils geschlossene obere und untere Zahnflächenebenen, ein Herausquetschen unter Bildung einer deformierten Bandoberfläche im Spleißbereich ist damit vorteilhaft verhindert.

Die Fig. 5 - 12 zeigen Schnittansichten durch Klemmrippen, wie sie in Fig. 1 gezeigt sind, unter Darstellung des eigentlichen Klemmbereichs. Es sei angenommen, dass die Darstellungen in den Fig. 5 - 12 jeweils den Ausschnitt der Klemmrippe 6a, wie sie in Fig. 1 gezeigt ist, zeigt.

Fig. 5 zeigt ersichtlich, dass die Oberfläche 20 der Klemmrippe 6a unter Ausbildung von zahnförmigen Erhebungen 21 profiliert bzw. strukturiert ist. Hierzu sind entsprechende Vertiefungen 22 eingefräst, so dass die Erhebungen 21 stehen bleiben. Diese laufen ersichtlich spitz zu, stellen also gerade, spitze Zähne dar.

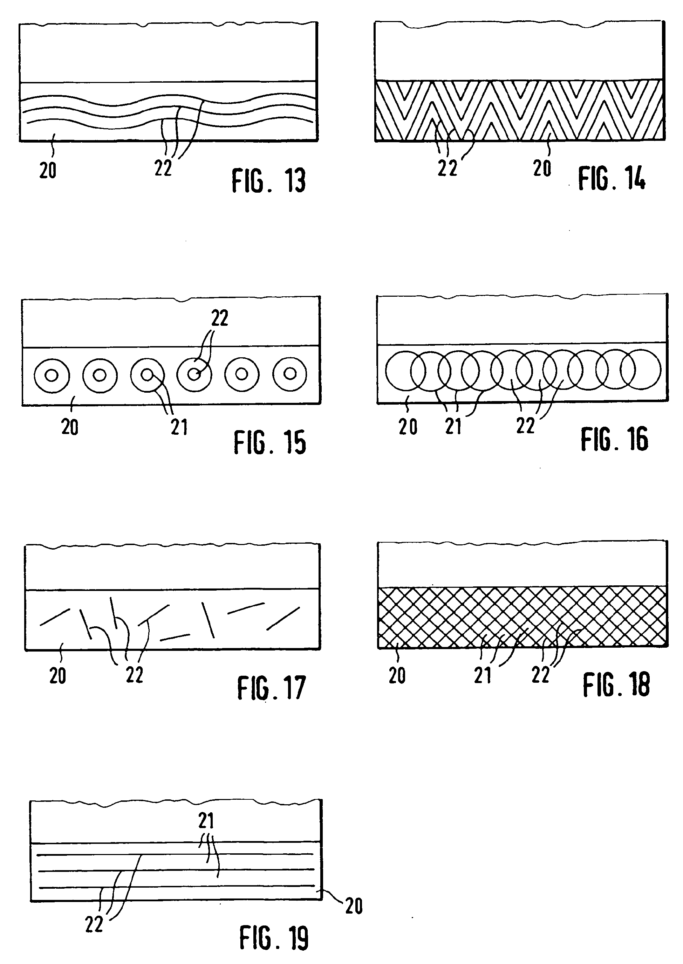

Der Verlauf der Zähne längs der Klemmrippe 14 ist in jedem Fall so, dass sie nicht geradlinig entlang der Klemmrippe verlaufen, mithin also parallel zu den Fäden, die im Bandabschnitt 9 bzw. 10 angeordnet sind, verlaufen. Diese Bandfäden 23 sind in Fig. 1 im Schnitt gezeigt. Sie verlaufen senkrecht zur Bandlängsrichtung. Würden die Erhebungen 21 geradlinig längs der Klemmrippe 6a verlaufen, so könnten die spitz zulaufenden Zähne genau zwischen zwei parallel verlaufende Bandfäden eingedrückt werden, was dazu führt, dass die Fäden auseinander geschoben werden. Der Verlauf der Erhebungen 21 ist jedoch stets so, dass dies ausgeschlossen ist. Ein möglicher Verlauf ist beispielsweise in Fig. 13 gezeigt. Die Erhebungen 21 können dort beispielsweise bogenförmig verlaufen, wie bei dem Muster in Fig. 13 dargestellt. Dort ist die Oberfläche 20 gezeigt, sowie exemplarisch drei Vertiefungen 22, zwischen denen die in Fig. 5 gezeigten Erhebungen stehen bleiben. Ein solcher bogen- oder wellenförmiger Verlauf verhindert, dass die Erhebungen 21 zwischen zwei parallele Bandfäden geführt werden können, nachdem so sichergestellt ist, dass die Erhebungen stets über mehrere benachbarte Bandfäden laufen. Fig. 14 zeigt eine weitere Aufsicht mit einem anderen Profil. Die Oberfläche 20 ist hier mit mehreren pfeilförmig verlaufenden Vertiefungen 22 profiliert, so dass letztlich die Erhebungen 21, wie sie Fig. 5 zeigt, ebenfalls pfeilförmig verlaufen. Die Darstellungen der Fig. 13 und 14 sind keinesfalls abschließend. Vielmehr ist jeder mögliche Vertiefungsverlauf denkbar, solange sichergestellt ist, dass die resultierenden Erhebungen nicht fadenparallel verlaufen.

Eine weitere mögliche Zahnform zeigt Fig. 6. Dort sind die Erhebungen 21 am freien Ende rundlich ausgeführt, also nicht spitz wie in Fig. 6. Fig. 7 zeigt Erhebungen, die in Richtung der Vorschubbewegung der Klemmrippe geneigt sind. Sie könnten aber auch gleichermaßen entgegengesetzt geneigt sein.

Eine solche Ausrichtung ist primär in Fig. 8 gezeigt, wo die Erhebungen 21 entgegen zur Bewegungsrichtung gerichtet sind und - ähnlich Fig. 6 - endseitig abgerundet sind. Fig. 9 zeigt demgegenüber sägezahnförmige Erhebungen 21, die hier in Bewegungsrichtung gerichtet sind, jedoch gleichermaßen auch nach innen gerichtet sein können. Neben der in Fig. 9 gezeigten spitz auslaufenden Form ist es natürlich auch denkbar, diese Sägezähne abgerundet auszuführen.

Die Fig. 10 und 11 zeigen schließlich Erhebungen 21, die über relativ breite Nuten 22 herausgearbeitet sind. Die Erhebungen 21 bei der Ausführungsform nach Fig. 10 laufen trapezförmig zu, während die Erhebungen 21 nach Fig. 11 im Wesentlichen rechteckig verlaufen.

Schließlich zeigt Fig. 12 eine Oberfläche, bei der die Erhebungen 21 wellenförmig verlaufen, das heißt, die gesamte Oberfläche ist - querschnittlich gesehen - wellenförmig profiliert.

An dieser Stelle ist festzuhalten, dass sämtliche in den Fig. 5 - 12 gezeigten Profil- oder Strukturformen wie insbesondere bezüglich der Fig. 13 und 14 beschrieben in einer Form ausgeführt sind bzw. verlaufen, dass sie stets mehrere Bandfäden übergreifen.

Weitere mögliche Strukturierungen zeigen die Fig. 15 - 19. Bei der in Fig. 15 gezeigten Oberfläche 20 sind im gezeigten Beispiel kreisförmige Vertiefungen 21 in die Oberfläche 20 eingefräst, so dass letztlich runde Erhebungen 22 stehen bleiben, wenn die in der gleichen Ebene wie die Oberfläche 20 (die gegenüber den strukturierenden Vertiefungen ebenfalls eine Erhebung darstellt) enden. Eine weitere Profilierungsform zeigt Fig. 16. Dort sind die Vertiefungen 21 ebenfalls kreisförmig ausgeführt, sie greifen jedoch ineinander. In der Oberfläche 20 werden auch hier verschiedene, über die Vertiefungen definierte weitere Erhebungen 22 herausgearbeitet, die ebenfalls völlig unregelmäßig bezogen auf die Lage der Bandfäden sind, mithin also ein Eingriff zwischen zwei Bandfäden beim Klemmen völlig ausgeschlossen ist.

Fig. 17 zeigt schließlich eine Aufsicht auf eine Oberfläche 20, bei der unregelmäßige Vertiefungen 22 hier in Linienform (entsprechend können bogenförmige Vertiefungen, schlangen- oder wellenförmige Vertiefungen eingefräst sein) liegen. Auch hierdurch kann eine Oberflächenstrukturierung erreicht werden, bei der die verbleibende Erhebung - die hier letztlich der gesamten Oberfläche 20 entspricht - stets über mehrere parallele Bandfäden verläuft.

Fig. 18 zeigt eine Strukturierung einer Oberfläche 20 in Rändelform. Hier verlaufen viele einzelne Vertiefungen 22 in der üblichen kreuzenden Rändelstruktur. Hierdurch werden rautenförmige Erhebungen 21 herausgearbeitet, die gleichermaßen so bemessen sind, bzw. so geformt sind, dass der nachteilige Eingriff zwischen zwei Bandfäden beim Klemmen ausgeschlossen ist.

Eine letzte Profilierungsgestaltung zeigt Fig. 19. Dort sind in die Oberfläche 20 mehrere parallele Vertiefungen 22 eingefräst, die in Rippenlängsrichtung verlaufen, mithin also parallel zur Richtung der Bandfäden verlaufen. Die verbleibenden Erhebungen 21 laufen folglich ebenfalls parallel zu den Bandfäden. Um zu vermeiden, dass bei dieser Ausgestaltung die Erhebungen zwischen zwei Bandfäden eingeführt werden können, sind die Erhebungen 21 so breit ausgeführt, dass sie stets mindestens zwei Bandfäden übergreifen. Denkbar ist beispielsweise eine Zahn- oder Profilform, wie sie in den Fig. 10 und 11 dargestellt ist. Die Erhebungen 21 sind beispielsweise zwischen 3 - 4 mm breit, bei einem üblichen Fadenabstand von ca. 2 mm. Hierdurch wird eine großflächige Auflagefläche pro Zahn realisiert, die gewährleistet, dass stets mindestes zwei Bandfäden übergriffen sind.

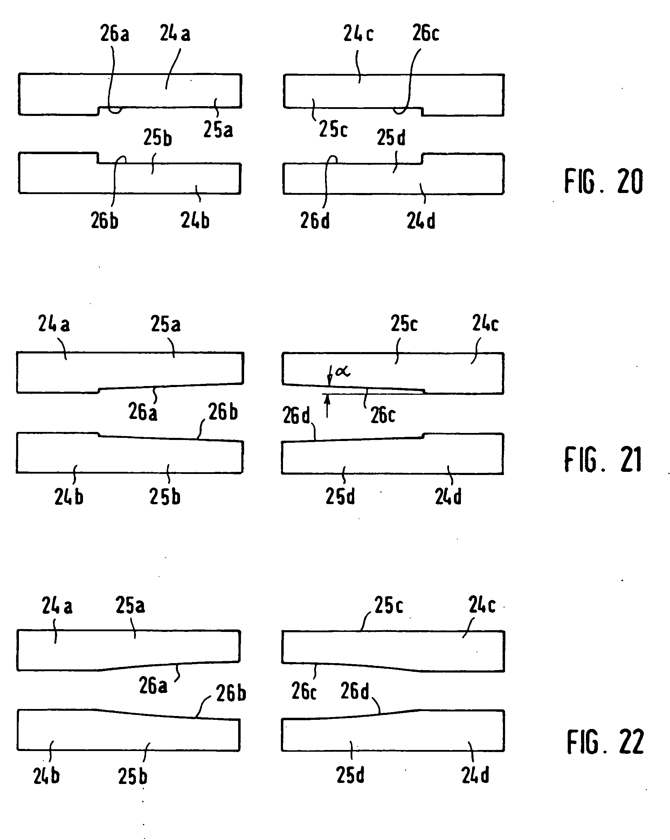

Die Fig. 20 bis 22 zeigen unterschiedlich geformte Zahnflächen., Gezeigt sind jeweils vier Zahnleisten 24a - 24d, wie sie bei der in Fig. 1 gezeigten Vorrichtung eingesetzt werden können. Die in Fig. 20 gezeigten Zähne 25a - 26d der Zahnleisten 24a - 24d zeigen alle parallel zueinander verlaufende Zahnflächen 26a - 26d, die Zahnflächen der übereinander liegenden Zahnleisten liegen ersichtlich ebenfalls parallel. Bei zusammengefahrenen Zahnleisten ergibt sich somit ein rechteckiger Freiraum zur Aufnahme des Bandmaterials. Die Zähne gehen hier - wie bei den anderen Ausführungen auch - rechtwinklig von der Basis bzw. der Klemmrippe ab, dieser Übergang kann aber auch rundlich oder bogenförmig sein.

Bei der in Fig. 21 gezeigten Ausführung verlaufen die Zahnflächen 26a - 26d unter einem Winkel zur Klemmflächenebene. Die einander gegenüberliegenden Zahnflächen 25a und 25b bzw. 25c und 25d laufen zu den freien Zahnenden hin auseinander. Bei zusammengefahrenen Zahnleisten wechseln sich in einer Ebene die Zahnflächen der ineinandergefahrenen Zähne 25a und 25c bzw. 25b und 25d ab. Der jeweiligen Winkel α ist bevorzugt ≤ 1,5°.

Fig. 22 zeigt schließlich leicht bogenförmig gekrümmte Zahnflächen 26a - 26d. Die einander gegenüberliegenden Zahnflächen 26a und 26b bzw. 26c und 26d laufen auch hier zu ihren freien Enden hin auseinander. Auch hier wechseln sich bei zusammengefahrenen Zahnleisten in einer Ebene die Zahnflächen der ineinandergefahrenen Zähne 25a und 25c bzw. 25b und 25d ab.

Abschließend ist festzuhalten, dass die gezeigten Ausführungsbeispiele hinsichtlich der Zahnform sowie der Strukturierung lediglich exemplarisch sind. Es sind beliebige andere Ausgestaltungen denkbar. Sichergestellt sein muss jedoch in jedem Fall, dass die durch die Profilierung erzeugten Erhebungen bzw. Flächen, die an dem Band angreifen, so verlaufen bzw. eine solche Geometrie aufweisen bzw. derart breit sind, dass der nachteilige Eingriff zwischen zwei Bandfäden unter Verdrängung derselben ausgeschlossen ist.

## Patentansprüche

1. Spleißvorrichtung zum stumpfen Verspleißen zweier Bandabschnitte, insbesondere un- oder vorvulkanisierter Cordbandabschnitte zur Reifenherstellung, mit zwei gegeneinander verschiebbaren Spleißleistenpaaren, deren übereinander liegende Einzelspleißleisten zwischen einer oberen Freigabestellung und einer unteren Einklemmstellung für die Ränder der Bandabschnitte verfahrbar sind, wobei die Spleißleisten Zahnleisten (5a, 5b, 6a, 6b) sind und sowohl die Zähne (12) der beiden oberen als auch die der beiden unteren Zahnleisten (5a,6a, 5b, 6b) gegeneinander gestellt und auf Lücke versetzt angeordnet sind, und wobei die Zähne (12) der übereinander liegenden Zahnleisten (5a, 5b, 6a, 6b) auf Lücke versetzt angeordnet sind, **dadurch gekennzeichnet, dass** die Zahnleisten (5a, 5b, 6a) jeweils auf der Klemmseite mit hinter den Zähnen (12) angeordneten erhöhten Klemmrippen (14) versehen sind, wobei die Zähne (12, 25a, 25b, 25c, 25d) vollständig ineinander fahrbar sind, so dass sich geschlossene Flächen, gebildet durch die zum Bandabschnitt weisenden Zahnflächen, ergeben.

2. Spleißvorrichtung nach Anspruch 1, **dadurch gekennzeichnet, dass** der Überstand der Klemmrippen (14) über die entsprechende Ebene (15, 16) der Zähne abhängig von der Dicke der Bandabschnitte (9, 10) zwischen ca. 0,1 und 1 mm liegt.

3. Spleißvorrichtung nach Anspruch 1 oder 2, **dadurch gekennzeichnet, dass** die Zahnleisten (5a, 6a, 5b, 6b) mit konisch zulaufenden Zähnen (12) vollständig ineinander verfahrbar sind.

4. Spleißvorrichtung nach einem der Ansprüche 1 bis 3, **dadurch gekennzeichnet, dass** die Zähne (12) komplementär zu den Lücken (13) trapezförmig ausgebildet sind.

5. Spleißvorrichtung nach einem der Ansprüche 1 bis 4, **dadurch gekennzeichnet, dass** die Länge der Zähne (12) erheblich größer ist als deren Abstand.

6. Spleißvorrichtung nach Anspruch 5, **dadurch gekennzeichnet, dass** die Länge der Zähne (12) ca. 10 bis 40 mm, vorzugsweise 30 mm, und ihr Abstand ca. 5 bis 20 mm, vorzugsweise 14 mm beträgt.

7. Spleißvorrichtung nach einem der Ansprüche 1 bis 3, **dadurch gekennzeichnet, dass** die Zähne (12) der Zahnleisten in der Ausgangsklemmstellung bereits mehrere Millimeter ineinander greifen.

8. Spleißvorrichtung nach Anspruch 7, **dadurch gekennzeichnet, dass** die Stoßkante (11) der aneinander liegenden Bandabschnitte (9, 10) etwa in der Mitte des Überlappungsbereichs der Zähne (12) in der Ausgangsstellung angeordnet ist.

9. Spleißvorrichtung nach einem der vorangehenden Ansprüche, **dadurch gekennzeichnet, dass** die Oberfläche (20) einer Klemmrippe (14) unter Ausbildung von am Bandabschnitt angreifenden Erhebungen (21) strukturiert ist, dass ein solcher Eingriff einer oder mehrere Erhebungen (21) zwischen zwei zueinander beabstandet, parallel und senkrecht zur Bandlängsrichtung verlaufende Bandfäden (23), der beim Klemmen und/oder beim Verschiebevorgang zu einer Auseinanderbewegung beider Bandfäden (23) führt, ausgeschlossen ist.

10. Spleißvorrichtung nach Anspruch 9, **dadurch gekennzeichnet, dass** die Oberseite einer Klemmrippe (14) mittels Vertiefungen (22), die zumindest abschnittsweise unter einem Winkel ungleich 90° zur Bandlängsrichtung verlaufen, strukturiert ist.

11. Spleißvorrichtung nach Anspruch 10, **dadurch gekennzeichnet, dass** die Vertiefungen (22) wellen- oder bogenförmig, geradlinig, gezackt, rändelförmig oder oval- oder kreisförmig verlaufen.

12. Spleißvorrichtung nach Anspruch 10 oder 11, **dadurch gekennzeichnet, dass** die über die Vertiefungen (22) definierten Erhebungen (21) - querschnittlich gesehen - zahnförmig ausgebildet sind, wobei die freien Enden der Erhebungen (21) spitz, flach oder gerundet auslaufen.

13. Spleißvorrichtung nach Anspruch 10 oder 11, **dadurch gekennzeichnet, dass** die über die Vertiefungen (22) definierten Erhebungen (21) - querschnittlich gesehen - wellenförmig verlaufen.

14. Spleißvorrichtung nach Anspruch 9, **dadurch gekennzeichnet, dass** die am Bandabschnitt angreifende Oberseite einer Klemmrippe (14) mittels Vertiefungen (22), die unter einem Winkel von 90° zur Bandlängsrichtung verlaufen, strukturiert ist, wobei die Breite der verbleibenden Erhebungen (21) derart bemessen sind, dass sie in der Klemmstellung wenigstens zwei zueinander beabstandet parallel und senkrecht zur Bandlängsrichtung verlaufende Bandfäden (23) übergreifen.

15. Spleißvorrichtung nach einem der Anspruche 9 bis 14, **dadurch gekennzeichnet, dass** die Oberseitenprofilierung zweier einander gegenüberliegenden Klemmrippen (14) unterschiedlich ist oder in Bandlängs- oder - querrichtung zueinander versetzt verläuft.

16. Spleißvorrichtung nach einem der vorangehenden Ansprüche, **dadurch gekennzeichnet, dass** die den Bandabschnitten zugewandten Zahnflächen (26a, 26b, 26c, 26d) der einander gegenüberliegenden Zahnleisten (12, 24a, 24b, 24c, 24d) in parallelen Ebenen liegen.

17. Spleißvorrichtung nach einem der Ansprüche 1 bis 15, **dadurch gekennzeichnet, dass** die den Bandabschnitten zugewandten Zahnflächen (26a, 26b, 26c, 26d) der einander gegenüberliegenden Zahnleisten (12, 24a, 24b, 24c, 24d) zu ihren freien ende hin gewinkelt oder bogenförmig auseinanderlaufen.

18. Spleißvorrichtung nach einem der Ansprüche 1 bis 15, **dadurch gekennzeichnet, dass** die den Bandabschnitten zugewandten Zahnflächen (26a, 26b, 26c, 26d) zweier einander gegenüberliegender Zahnleisten (12, 24a, 24b, 24c, 24d) unterschiedliche Kontur aufweisen, wobei die Zahnflächen einer Zahnleiste eben und parallel zur Klemmfläche der Klemmrippe liegt, während die Zahnflächen der anderen Zahnleiste gewinkelt oder bogenförmig gekrümmt dazu verlaufen.

## Claims

1. Splicing device for the butt-joining of two strip portions, in particular non-vulcanised or pre-vulcanised corded strip portions for the manufacture of tyres, having two splicing ridge pairs movable in opposite directions, whose individual splicing ridges lying one over another are movable between an upper release position and a lower clamping position for the edges of the strip portions, wherein the splicing ridges are toothed ridges (5a, 5b, 6a, 6b) and both the teeth (12) of the two upper and of the two lower toothed ridges (5a, 6a, 5b, 6b) are positioned opposite one another and are disposed staggered opposite the gaps, and wherein the teeth (12) of the toothed ridges (5a, 5b, 6a, 6b) lying one over another are disposed staggered opposite the gaps, **characterised in that** the toothed ridges (5a, 5b, 6a) are each provided on the clamping side with raised clamping ribs (14) disposed behind the teeth (12), the teeth (12, 25a, 25b, 25c, 25d) being movable completely into one another, so that closed surfaces are produced, formed by the tooth faces pointing towards the strip portion.

2. Splicing device according to claim 1, **characterised in that** the amount of projection of the clamping ribs (14) above the corresponding plane (15, 16) of the teeth is between about 0.1 and 1 mm depending on the thickness of the strip portions (9, 10).

3. Splicing device according to claim 1 or 2, **characterised in that** the toothed ridges (5a, 6a, 5b, 6b) may be moved fully into one another with conically converging teeth (12).

4. Splicing device according to one of claims 1 to 3, **characterised in that** the teeth (12) are formed trapezoid, in a complementary manner to the gaps (13).

5. Splicing device according to one of claims 1 to 4, **characterised in that** the length of the teeth (12) is considerably larger than their spacing.

6. Splicing device according to claim 5, **characterised in that** the length of the teeth (12) is approximately 10 to 40 mm, preferably 30 mm, and their spacing is approximately 5 to 20 mm, preferably 14 mm.

7. Splicing device according to one of claims 1 to 3, **characterised in that** the teeth (12) of the toothed ridges are already engaged a few millimetres with one another in the starting clamping position.

8. Splicing device according to claim 7, **characterised in that** the butt edge (11) of the mutually abutting strip portions (9, 10) is disposed roughly in the centre of the overlap region of the teeth (12) in the starting position.

9. Splicing device according to one of the preceding claims, **characterised in that** the surface (20) of a clamping rib (14) is structured so as to form projections (21) acting on the strip portion, **in that** engagement of one or more projections (21) between two strip cords (23) which are spaced apart, extending parallel and perpendicular to the strip longitudinal direction, is excluded if it leads during clamping and/or displacement to moving apart of the two strip cords (23).

10. Splicing device according to claim 9, **characterised in that** the upper face of a clamping rib (14) is structured by means of recesses (22), which extend at least in sections at an angle not equal to 90° relative to the strip longitudinal direction.

11. Splicing device according to claim 10, **characterised in that** the recesses (22) extend in an undulating, curved, rectilinear, serrated, knurled, oval or circular manner.

12. Splicing device according to claim 10 or 11, **characterised in that** the projections (21) defined via the recesses (22) - viewed in cross-section - are formed like teeth, the free ends of the projections (21) extending in a pointed, flat or rounded manner.

13. Splicing device according to claim 10 or 11, **characterised in that** the projections (21) defined via the recesses (22) extend in an undulating manner viewed in cross-section.

14. Splicing device according to claim 8, **characterised in that** the upper face of a clamping rib (14) acting on the strip portion is structured by means of recesses (22), which extend at an angle of 90° to the strip longitudinal direction, the width of the remaining projections (21) being so dimensioned that they overlap at least two strip cords (23) spaced apart and extending parallel and perpendicular to the strip longitudinal direction.

15. Splicing device according to one of claims 9 to 14, **characterised in that** the surface profiling of two opposing clamping ribs (14) is different or extends mutually offset in the strip longitudinal or transverse direction.

16. Splicing device according to one of the preceding claims, **characterised in that** the tooth faces (26a, 26b, 26c, 26d), associated with the strip portions, of the mutually opposing toothed ridges (12, 24a, 24b, 24c, 24d) lie in parallel planes.

17. Splicing device according to one of claims 1 to 15, **characterised in that** the tooth faces (26a, 26b, 26c, 26d), associated with the strip portions, of the mutually opposing toothed ridges (12, 24a, 24b, 24c, 24d) are angled or curved apart towards their free end.

18. Splicing device according to one of claims 1 to 15, **characterised in that** the tooth faces (26a, 26b, 26c, 26d), associated with the strip portions, of two opposing toothed ridges (12, 24a, 24b, 24c, 24d) have a different contour, the tooth faces of one toothed ridge lying plane and parallel to the clamping face of the clamping rib, whilst the tooth faces of the other toothed ridge extend angled thereto or curved thereto.

## Revendications

1. Dispositif de raccordement destiné à relier bout à bout deux extrémités de bande, en particulier des extrémités de bandes à armature de câbles non vulcanisées ou pré-vulcanisées pour la fabrication de pneus, comportant deux paires de barres, aptes à se déplacer l'une contre l'autre et dont les barres individuelles superposées peuvent être déplacées entre une position de dégagement supérieure et une position de serrage inférieure pour les bords des extrémités des bandes, les barres étant des barres dentées (5a, 5b, 6a, 6b) et les dents (12) des deux barres dentées supérieures et des deux barres dentées inférieures (5a, 6a, 5b, 6b) étant orientées les unes vers les autres et étant disposées en quinconce, et les dents (12) des barres dentées (5a, 5b, 6a, 6b) superposées étant disposées en quinconce, **caractérisé en ce que** les barres dentées (5a, 5b, 6a) sont munies chacune, sur le côté de serrage, de nervures de serrage (14) surélevées, disposées derrière les dents (12), les dents (12, 25a, 25b, 25c, 25d) étant aptes à engrener entièrement les unes dans les autres, de manière à obtenir des surfaces fermées, formées par les faces de dent dirigées vers le bout de bande.

2. Dispositif de raccordement selon la revendication 1, **caractérisé en ce que** la saillie des nervures de serrage (14) au-dessus des plans (15, 16) correspondants des dents se situe entre 0,1 et 1 mm environ en fonction de l'épaisseur des bouts de bande (9, 10).

3. Dispositif de raccordement selon la revendication 1 ou 2, **caractérisé en ce que** les barres dentées (5a, 6a, 5b, 6b) avec des dents (12) se terminant en cône sont aptes à se déplacer en engrenant entièrement les unes dans les autres.

4. Dispositif de raccordement selon l'une quelconque des revendications 1 à 3, **caractérisé en ce que** les dents (12), de manière complémentaire aux intervalles (13), sont réalisées en forme de trapèze.

5. Dispositif de raccordement selon l'une quelconque des revendications 1 à 4, **caractérisé en ce que** la longueur des dents (12) est nettement supérieure à leur écartement.

6. Dispositif de raccordement selon la revendication 5, **caractérisé en ce que** la longueur des dents (12) est de l'ordre de 10 à 40 mm environ, de préférence 30 mm, et leur écartement est de l'ordre de 5 à 20 mm environ, de préférence 14 mm.

7. Dispositif de raccordement selon l'une quelconque des revendications 1 à 3, **caractérisé en ce que** les dents (12) des barres dentées engrènent déjà sur quelques millimètres dans la position de serrage initiale.

8. Dispositif de raccordement selon la revendication 7, **caractérisé en ce que** le bord de contact (11) des bouts de bande (9, 10) aboutés se situe à peu près au milieu de la zone de chevauchement des dents (12) dans la position de départ.

9. Dispositif de raccordement selon l'une quelconque des revendications précédentes, **caractérisé en ce que** la face supérieure (20) d'une nervure de serrage (14) est structurée en formant des bosses (21) entrant en contact avec le bout de bande, **en ce qu'**un tel contact d'une ou de plusieurs bosses (21) entre deux brins de bande (23) disposés à distance l'un de l'autre parallèlement entre eux et perpendiculairement au sens longitudinal de la bande, qui entraîne un écartement des deux brins de bande (23) pendant le serrage et/ou pendant le processus de déplacement, est exclu.

10. Dispositif de raccordement selon la revendication 9, **caractérisé en ce que** la face supérieure d'une nervure de serrage (14) est structurée par des creux (22), qui s'étendent au moins par zones en formant un angle différent de 90° par rapport au sens longitudinal de la bande.

11. Dispositif de raccordement selon la revendication 10, **caractérisé en ce que** les creux (22) s'étendent en formant des ondes ou courbes, des droites, des zigzags, des stries ou des ovales ou cercles.

12. Dispositif de raccordement selon la revendication 10 ou 11, **caractérisé en ce que** les bosses (21) définies par l'intermédiaire des creux (22) sont réalisées en forme de dents - par référence à une coupe transversale -, les extrémités libres des bosses (21) étant pointues, plates ou arrondies.

13. Dispositif de raccordement selon la revendication 10 ou 11, **caractérisé en ce que** les bosses (21) définies par l'intermédiaire des creux (22) s'étendent - par référence à une coupe transversale - sous forme ondulée.

14. Dispositif de raccordement selon la revendication 9, **caractérisé en ce que** la face supérieure d'une nervure de serrage (14), qui entre en contact avec le bout de bande, est structurée par des creux (22) qui s'étendent en formant un angle de 90° par rapport au sens longitudinal de la bande, la largeur des bosses (21) subsistantes étant choisie de telle sorte que, dans la position de serrage, elles s'engagent au-dessus d'au moins deux brins de bande (23) disposés parallèlement à distance l'un de l'autre et perpendiculairement au sens longitudinal de la bande.

15. Dispositif de raccordement selon l'une quelconque des revendications 9 à 14, **caractérisé en ce que** le profilage de la face supérieure de deux nervures de serrage (14) face à face est différent ou s'étend avec un décalage mutuel dans le sens longitudinal de la bande ou dans le sens transversal.

16. Dispositif de raccordement selon l'une quelconque des revendications précédentes, **caractérisé en ce que** les faces de dent (26a, 26b, 26c, 26d), orientées vers les bouts de bande, des barres dentées (12, 24a, 24b, 24c, 24d) face à face sont situées dans des plans parallèles.

17. Dispositif de raccordement selon l'une quelconque des revendications 1 à 15, **caractérisé en ce que** les faces de dent (26a, 26b, 26c, 26d), orientées vers les bouts de bande, des barres dentées (12, 24a, 24b, 24c, 24d) face à face s'étendant vers leurs extrémités libres en s'écartant par un coude ou une courbure.

18. Dispositif de raccordement selon l'une quelconque des revendications 1 à 15, **caractérisé en ce que** les faces de dent (26a, 26b, 26c, 26d), orientées vers les bouts de bande, de deux barres dentées (12, 24a, 24b, 24c, 24d) face à face ont un contour différent, les faces de dent d'une barre dentée étant planes et parallèles à la surface de serrage de la nervure de serrage, alors que les faces de dent de l'autre barre dentée s'étendent en formant un coude ou une courbure par rapport à ladite surface de serrage.
